# EUROPEAN PATENT APPLICATION

(11) **EP 1 988 736 A2**
(43) Date of publication of application: **05.11.2008**
(21) Application number: 08014870.3
(22) Date of filing: 03.09.1999
(51) Int. Cl.: H04Q 7/38

(54) **Method and system for locating a mobile subscriber in a CDMA communication system**

(30) Priority: 22.03.1999 US 274081
(62) Divisional of application: 04027093.6
(71) Applicant: Interdigital Technology Corporation, Wilmington, DE 19810 (US)
(72) Inventor: Mesecher, David, K., NY 11746 (US)
(74) Representative: Meissner, Bolte & Partner

(57) **Abstract**

The present inventation provides a base station comprising:
a plurality of antennas, each of the antennas separated by a known distance;
means for transmitting a first spread spectrum signal having a first code;
means for receiving, using the plurality of antennas, a second spread spectrum signal having a second code, the second spread spectrum signal time synchronized with the first spread spectrum signal;
means for making a distance determination based on in part a timing difference between the second code of the received second spread spectrum signal and the first code of the base station's transmitted first spread spectrum signal;
means for comparing a phase difference of a carrier signal of the second spread spectrum signal as received by each of the plurality of antennas; and
means for determining an angle of the received second spread spectrum signal using the known distance between the antennas and the phase difference; and
means for determining a location of a source of the second spread spectrum signal using the determined angle and the distance determination.

## Description

### Field of the Invention

This invention generally relates to spread spectrum code division multiple access (CDMA) communication systems. More particularly, the present invention relates to a system and method that determines the geographic location of a subscriber unit within a CDMA communication system.

### Description of the Prior Art

Wireless systems capable of locating a subscriber are presently known in the art. One wireless technique uses the global positioning system (GPS). In GPS, the communication handset receives data transmitted continuously from the 24 NAVSTAR satellites. Each satellite transmits data indicating the satellite's identity, the location of the satellite and the time the message was sent. The handset compares the time each signal was received with the time it was sent to determine the distance to each satellite. Using the determined distances between the satellites and the handset along with the location of each satellite, the handset can triangulate its location and provide the information to a communication base station. However, the incorporation of a GPS within a subscriber unit increases its cost.

Another subscriber location technique is disclosed in U.S. Patent No. 5,732,354. A mobile telephone using time division multiple access (TDMA) as the air interface is located within a plurality of base stations. The mobile telephone measures the received signal strength from each of the base stations and transmits each strength to each respective base station. At a mobile switching center, the received signal strengths from the base stations are compared and processed. The result yields the distance between the mobile telephone and each base station. From these distances, the location of the mobile telephone is calculated.

Wireless communication systems using spread spectrum modulation techniques are increasing in popularity. In code division multiple access (CDMA) systems, data is transmitted using a wide bandwidth (spread spectrum) by modulating the data with a pseudo random chip code sequence. The advantage gained is that CDMA systems are more resistant to signal distortion and interfering frequencies in the transmission path than communication systems using the more common time division multiple access (TDMA) or frequency division multiple access (FDMA) techniques.

There exists a need for an accurate mobile subscriber unit location system that uses data already available in an existing CDMA communication system.

### SUMMARY OF THE INVENTION

The invention determines the geographic location of a subscriber unit within a CDMA communication system. At least one base station transmits a spread spectrum signal with a chip code sequence unique to that base station. A subscriber unit receives the base station signal and transmits a spread spectrum signal with a unique chip code sequence time synchronized with the chip code sequence of the received base station signal. The base station receives the subscriber unit signal and compares the chip code sequence of the received subscriber unit signal with the chip code sequence signal transmitted by the base station to determine the location of the subscriber unit.

### BRIEF DESCRIPTION OF THE DRAWINGS

**Figure 1** is an illustration of a simplified, prior art CDMA system.
**Figure 2** is an illustration of a prior art CDMA system.
**Figure 3** is a block diagram of major components within a prior art CDMA system.
**Figure 4** is a block diagram of components within a prior art CDMA system.
**Figure 5** is an illustration of a global pilot signal and an assigned pilot signal being communicated between a base station and a subscriber unit.
**Figure 6** is a block diagram of a first embodiment of the present invention using at least three base stations.
**Figure 7** is an illustration of locating a subscriber unit using the first embodiment of the present invention with at least three base stations.
**Figure 8** is a block diagram of a second embodiment of the present invention showing components used in a subscriber unit.
**Figure 9** is an illustration of locating a subscriber unit using the second embodiment of the present invention with two base stations.
**Figure 10** is an illustration of locating a subscriber unit using the second embodiment of the present invention with more than two base stations.
**Figure 11** is a detailed illustration of the third embodiment of the present invention having a base station with multiple antennas.
**Figure 12** is an illustration of the third embodiment having a base station with multiple antennas.
**Figure 13** is a block diagram of components used in the third embodiment.
**Figure 14** is an illustration of multipath.
**Figure 15** is a graph of a typical impulse response of multipath components.
**Figure 16** is a block diagram of components within a fourth embodiment correcting for multipath.

### DESCRIPTION OF THE PREFERRED EMBODIMENT

The preferred embodiments will be described with reference to the drawing figures where like numerals represent like elements throughout.

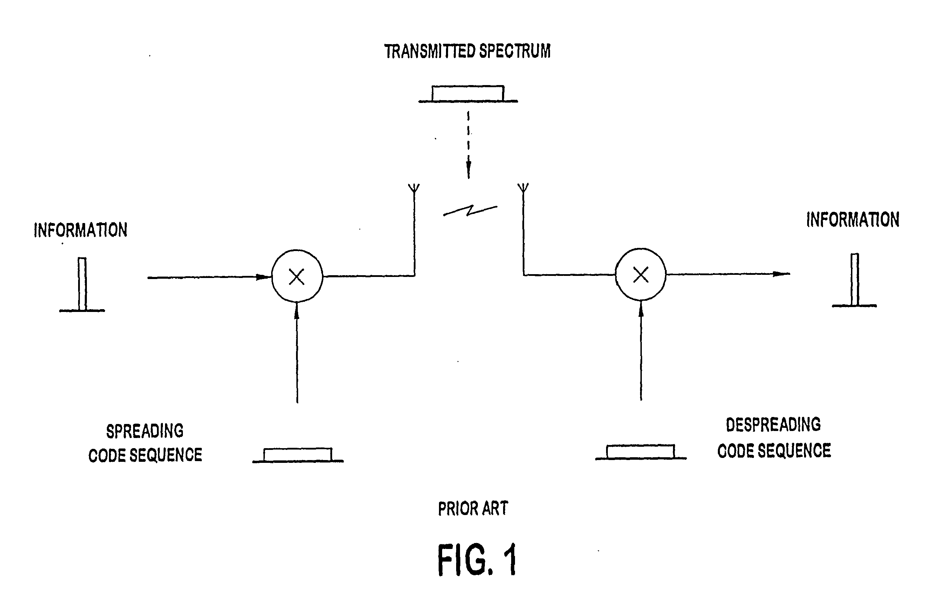

Shown in **Figure 1** is a simplified CDMA communication system. A data signal with a given bandwidth is mixed with a spreading code generated by a pseudo random chip code sequence generator producing a digital spread spectrum signal. Upon reception, the data is reproduced after correlation with the same pseudo random chip code sequence used to transmit the data. Every other signal within the transmission bandwidth appears as noise to the signal being despread.

For timing synchronization with a receiver, an unmodulated pilot signal is required for every transmitter. The pilot signal allows respective receivers to synchronize with a given transmitter, allowing despreading of a traffic signal at the receiver.

In a typical CDMA system, base stations send global pilot signals to all subscriber units within their communicating range to synchronize transmissions in a forward direction. Additionally, in some CDMA systems, for example a B-CDMA^{™} system, each subscriber unit sends a unique assigned pilot signal to synchronize transmissions in a reverse direction.

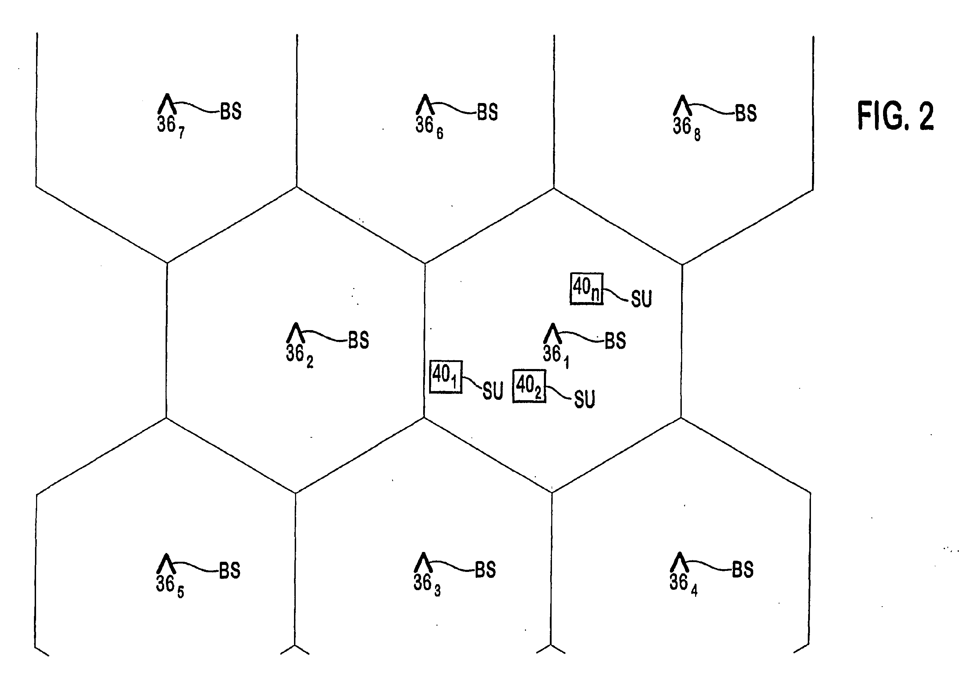

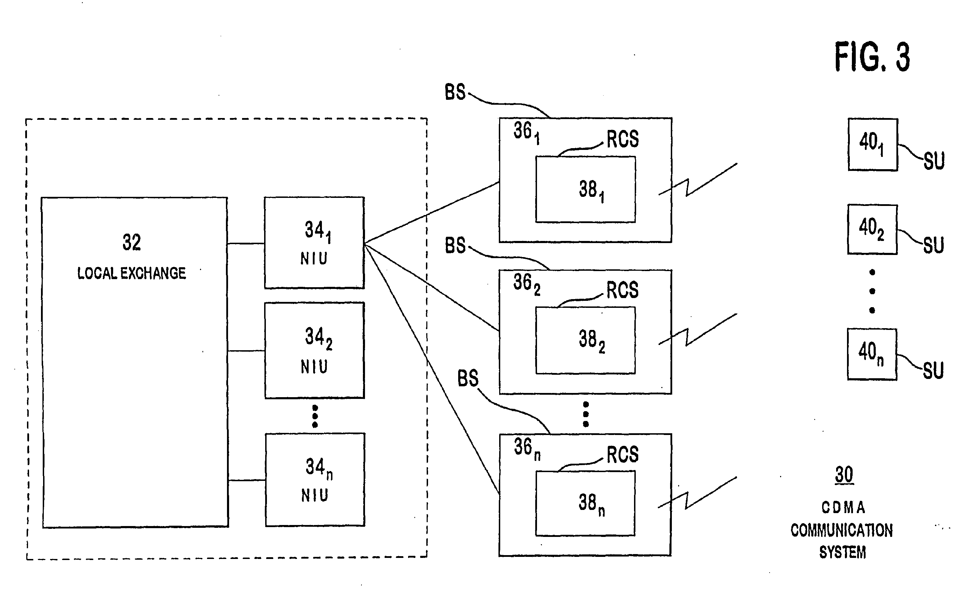

**Figure 2** illustrates a CDMA communication system **30.** The communication system **30** comprises a plurality of base stations **36₁, 36₂** ... **36ₙ**. Each base station **36₁**, **36₂** ... **36ₙ** is in wireless communication with a plurality of subscriber units **40₁**, **40₂** ... **40ₙ**, which may be fixed or mobile. Each subscriber unit **40₁**, **40₂** ... **40ₙ** communicates with either the closest base station **36₁** or the base station **36₁** which provides the strongest communication signal. Each base station **36₁**, **36₂** ... **36ₙ** is in communication with other components within the communication system **30** as shown in **Figure 3**.

A local exchange **32** is at the center of the communications system **30** and communicates with a plurality of network interface units (NlUs) **34₁**, **34₂** ... **34ₙ**. Each NTU is in communication with a plurality of radio carrier stations (RCS) **38₁**, **38₂** ... **38ₙ** or base stations **36₁**, **36₂** ... **36ₙ**. Each (RCS) **38₁**, **38₂**... **38ₙ** or base station **36₁**, **36₂** ... **36ₙ** communicates with a plurality of subscriber units **40₁**, **40₂** ... **40ₙ** within its communicating range.

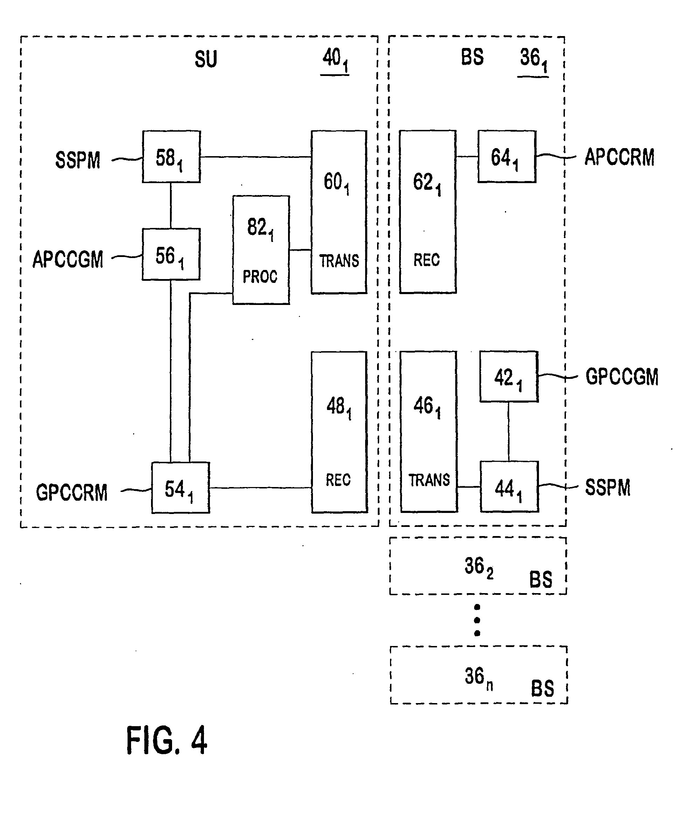

**Figure 4** depicts a block diagram of the pertinent parts of an existing spread spectrum CDMA communication system. Each independent base station **36**_{**1**,} **36₂** ... **36ₙ** generates a unique global pilot signal using a global pilot chip code generating means **42₁** and spread spectrum processing means **44₁**. The global pilot chip code generating means **42₁** generates a unique pseudo random chip code sequence. The unique pseudo random chip code sequence is used to spread the resultant signals bandwidth such as to 15 MHZ as used in the B-CDMA™ air interface. The spread spectrum processing means modulates the global pilot chip code sequence up to a desired center frequency. The global pilot signal is transmitted to all subscriber units **40₁** by the base station's transmitter **46₁**.

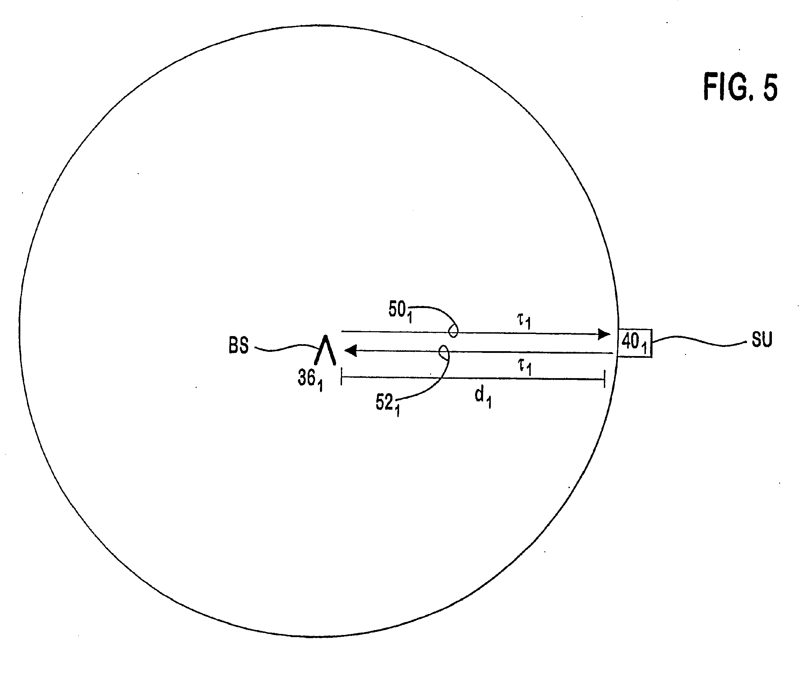

A receiver **48₁** at a subscriber unit **40₁** receives available signals from a plurality of base stations **36₁**, **36₂** ... **36ₙ**. As shown in **Figure 5**, the global pilot **50₁** travels from the base station **36₁** to the subscriber unit **40₁** and can be represented as: ${τ}_{1} = \frac{{d}_{1}}{c} .$
The time the signal travels from the base station **36₁** to the subscriber unit **40₁**, τ*₁*, equals the distance between the base station **36₁** and subscriber unit **40₁**, *d₁*, divided by the speed of light, **c**.

Referring back to **Figure 4****,** a global pilot chip code recovery means **54₁** within the subscriber unit **40₁** can receive global pilot chip code sequences from a plurality of base stations **36₁**, **36₂** ... **36ₙ**, The subscriber unit **40₁** generates a replica of a global pilot chip code sequence and synchronizes the generated replica's timing with the received global pilot **50₁**. The subscriber unit **40₁** also has a processor **82₁** to perform the many analysis functions of the subscriber unit **40₁.**

The subscriber unit **40₁** generates an assigned pilot signal **52₁** using assigned pilot chip code generating means **56₁** and spread spectrum processing means **58₁.** The assigned pilot chip code generating means **56₁** generates a pseudo random chip code sequence with its timing synchronized with the recovered global pilot chip code sequence. As a result, the assigned pilot chip code sequence is delayed by τ₁ with respect to the base station **36₁**, **36₂** ... **36ₙ.** The spread spectrum processing means **58₁** generates the assigned pilot signal **52₁** by modulating the assigned pilot chip code sequence up to a desired center frequency. The assigned pilot signal **52₁** is transmitted to all base stations **36₁**, **36₂** ... **36ₙ** within range to receive the assigned pilot signal **52₁**.

The base station **36₁** receives the assigned pilot signal **52₁** with the base station's receiver **62₁**. The received assigned pilot **52₁** travels the same distance *d₁* as the global pilot signal **50₁** as shown in **Figure 5**. Accordingly, the received assigned pilot signal will be delayed by τ₁ with respect to the mobile unit **40₁** and by 2τ*₁* with respect to the global pilot **50₁** generated at the base station **36₁**.

Since the chip code sequence of the assigned pilot **52₁** received at the base station **36₁** will be delayed by **2**τ*₁* with respect to the chip code sequence of the global pilot signal **50₁** generated at the base station **36₁**, the round trip propagation delay, **2**τ*₁*, can be determined by comparing the timing of the two chip code sequences. Using the round trip propagation delay, 2τ*₁*, the distance *d₁* between the base station **36₁** and subscriber unit **40₁** can be determined by: ${d}_{1} = c ⋅ \frac{2 ⁢ τ}{2} ⁢ 1 ⋅$
If a spreading sequence having a chipping rate of at least 80ns is used and the communication system has the ability to track 1/16^{th} of a chip, the distance *d₁* can be measured to within 2 meters.

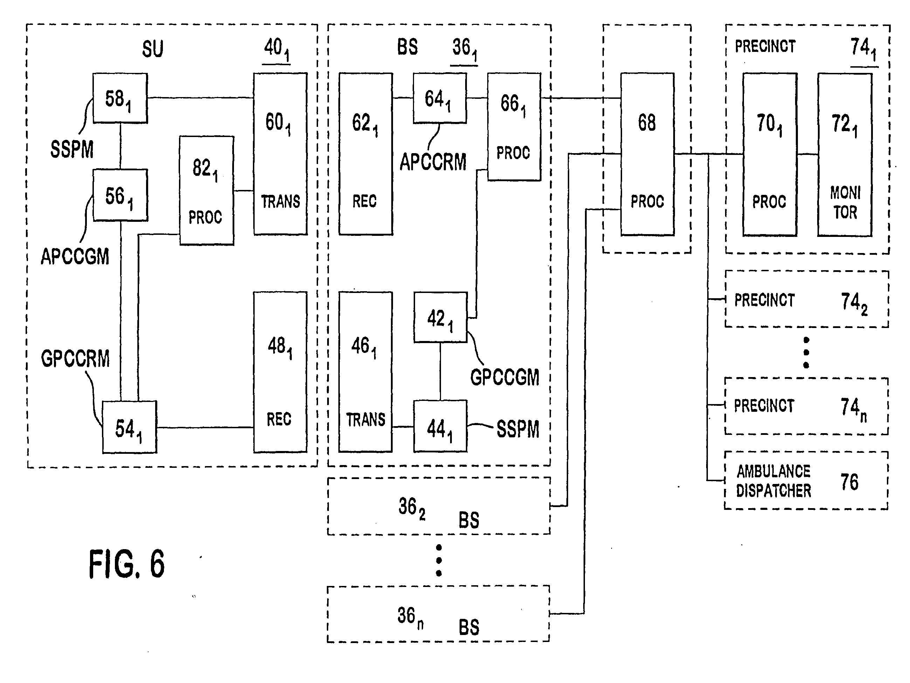

**Figure 6** is a block diagram of a first embodiment of the present invention. No additional hardware is required in the subscriber unit **40₁**. The only changes are implemented by software within the subscriber unit's processor **82₁** and the processors **66₁**, **66₂** ... **66ₙ**, **68, 70₁**, **70₂** ... **70ₙ** located within the base station **36₁**, NIU **34₁** or Local Exchange **32₁**, Precincts **74₁**, **74₂** ... **74ₙ** and Ambulance Dispatcher **76**.

The subscriber unit **40₁** is sent a signal by a base station **36₁** indicating that a 911 call was initiated and to begin the subscriber location protocol. Upon receipt, the subscriber unit **40₁** will sequentially synchronize its transmission chip code sequence to at least three base stations' chip code sequences. To allow reception by the base stations **36₂**, **36₃** ... **36ₙ** outside of the subscriber unit's normal communicating range, these transmissions will be sent at a higher than normal power level temporarily over-riding any adaptive power control algorithms.

A processor **66₁** within each base station **36₁**, **36₂** ... **36ₙ** is coupled to the assigned pilot chip code recovery means **64₁** and the global pilot chip code generator **42₁**. The processor **66₁** compares the two chip code sequences to determine the round trip propagation delay τ₁, τ₂ ... τₙ and the respective distance *d₁*, *d₂* ... *dₙ* between the subscriber unit **40₁** and the respective base station **36₁**, **36₂** ... **36ₙ**.

Within either a NIU **34₁** or the local exchange **32**, a processor **68** receives the distances *d₁, d₂* ... *dₙ* from the processors **66₁**, **66₂** ... **66ₙ** within all the base stations **36₁**, **36₂** ... **36ₙ**. The processor **68** uses the distances *d₁*, *d₂* ... *dₙ* to determine the location of the subscriber unit **40₁** as follows.

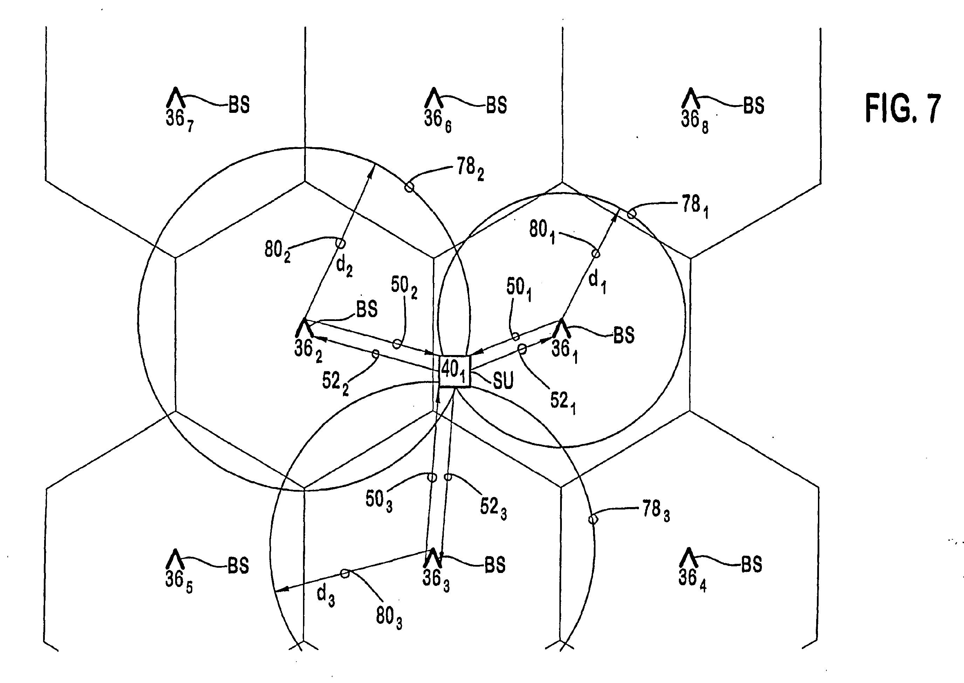

By using the known longitude and latitude from three base stations **36₁**, **36₂**, **36**₃ and distances *d₁, d₂, d₃,* the location of the subscriber unit **40₁** is determined. As shown in **Figure 7** by using the three distances *d₁, d₂, d₃*, three circles **78₁**, **78₂**, **78₃** with radiae **80₁**, **80₂**, **80₃** are constructed. Each circle **78₁**, **78₂**, **78₃** is centered around a respective base station **36₁**, **36₂**, **36₃**. The intersection of the three circles **78₁**, **78₂**, **78₃** is at the location of the subscriber unit **40₁.**

Using the Cartesian coordinates, the longitude and latitude corresponding with each base station **36₁**, **36₂** ... **36ₙ** is represented as *X*ₙ, *Y*ₙ, where *X*ₙ is the longitude and *Y*ₙ is the latitude. If *X, Y* represents the location of the subscriber unit **40₁**, using the distance formula the following equations result: ${\left({X}_{1}-X\right)}^{2} + {\left({Y}_{1}-Y\right)}^{2} = {d}_{1}^{2}$ ${\left({X}_{2}-X\right)}^{2} + {\left({Y}_{2}-Y\right)}^{2} = {d}_{2}^{2}$ ${\left({X}_{3}-X\right)}^{2} + {\left({Y}_{3}-Y\right)}^{2} = {d}_{3}^{2}$

In practice due to small errors in calculating the distances ***d**₁, **d**₂*, ***d**₃,* **Equations 3**, **4** and **5** cannot be solved using conventional algebra. To compensate for the errors, a maximum likelihood estimation is used to determine the location and are well known to those skilled in the art. For increased accuracy, additional base stations **36₄**, **36₅** ... **36ₙ** can be used to calculate additional distances for inclusion in the estimation analysis.

The subscriber unit's location is sent through the communication system **30** to at least one precinct **74₁**, **74₂**... **74ₙ** and an ambulance dispatcher **76**. A processor **70₁** within each precinct **74₁**, **74₂**... **74ₙ** and the ambulance dispatcher **76** receives the location of all 911 calls originating in the system and displays the location on a conventional computer monitor **72₁**. The display comprises a listing of all 911 calls and addresses on a geographic map.

An alternate approach reduces the number of processors by transmitting raw data through the communication system **30** and processing the raw data at a single site.

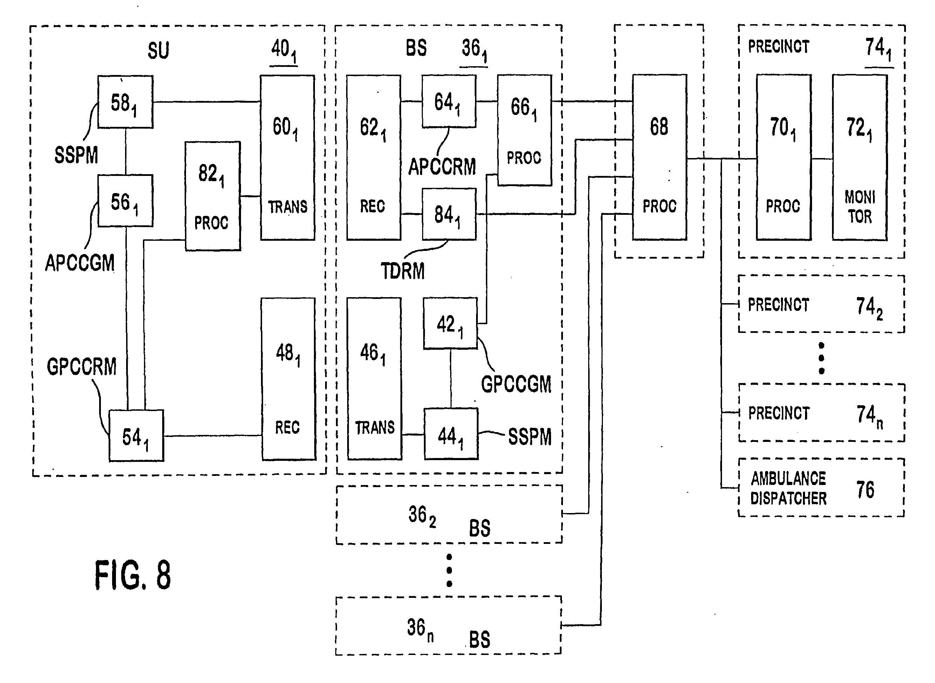

**Figure 8** is a second embodiment of a location system. At least two base stations **36₁**, **36₂** ... **36ₙ** have their internal timing synchronized with each other and transmit their respective global pilot signals **52₁**, **52₂** ... **52ₙ** with time synchronized chip code sequences. The subscriber unit **40₁** receives the global pilots **52₁**, **52₂** ... **52ₙ**. However, the received global pilots **52₁**, **52₂** ... **52ₙ** are not synchronized. The global pilot **52₁** from a first base station **36₁** will travel distance *d₁* and is delayed by τ*₁*. The global pilot **52₂** from a second base station **36₂** travels distance *d₂* and is delayed by τ*₂*. The subscriber unit **40₁** recovers each base station's global pilot chip code sequence with its global pilot chip code recovery means **54₁**. A processor **82₁** within the subscriber unit **40₁** is coupled to each global pilot chip code recovery means **54₁**, **52₂** ... **54ₙ**. The processor **82₁** compares the chip code sequences of each pair of pilot chip code sequences and calculates the time differences Δt₁, Δt₂ ... Δtₙ between the sequences as follows.

Within the subscriber unit **40₁**, the chip code sequences used by each base station **36₁**, **36₂** ...**36ₙ** are stored. After synchronizing with the first base station's pilot **36₁**, the processor **82₁** will store where within the sequence synchronization was obtained. This process is repeated for the other base stations **36₂**, **36₃** ... **36ₙ**. The synchronization process can be done sequentially (synchronizing to the first base station's chip code sequence then the second, etc.) or in parallel (synchronizing to all base stations at the same time).

By using the relative time difference between τ₁' τ₂' ... τₙ each base station's chip code sequence and knowing that each base station's pilot was sent at the same time, with two base stations the time differences are calculated as follows: $Δ ⁢ {t}_{1} = {τ}_{2} - {τ}_{1}$ $Δ ⁢ {t}_{2} = {τ}_{3} - {τ}_{2}$
The time differences Δt₁, Δt₂ ... Δtₙ are transmitted to at least one of the base stations **36₁**.

At least one base station **36₁** recovers the time difference data from the received signals using time difference recovery means **84₁**. The time difference data is sent with the distance data *d₁* through the communications system to a processor **68**. The processor 68 determines the location of the subscriber unit **40₁** using the time difference data Δt₁, Δt₂ ... Δtₙ and the distance data *d₁, d₂* ... *dₙ* as follows.

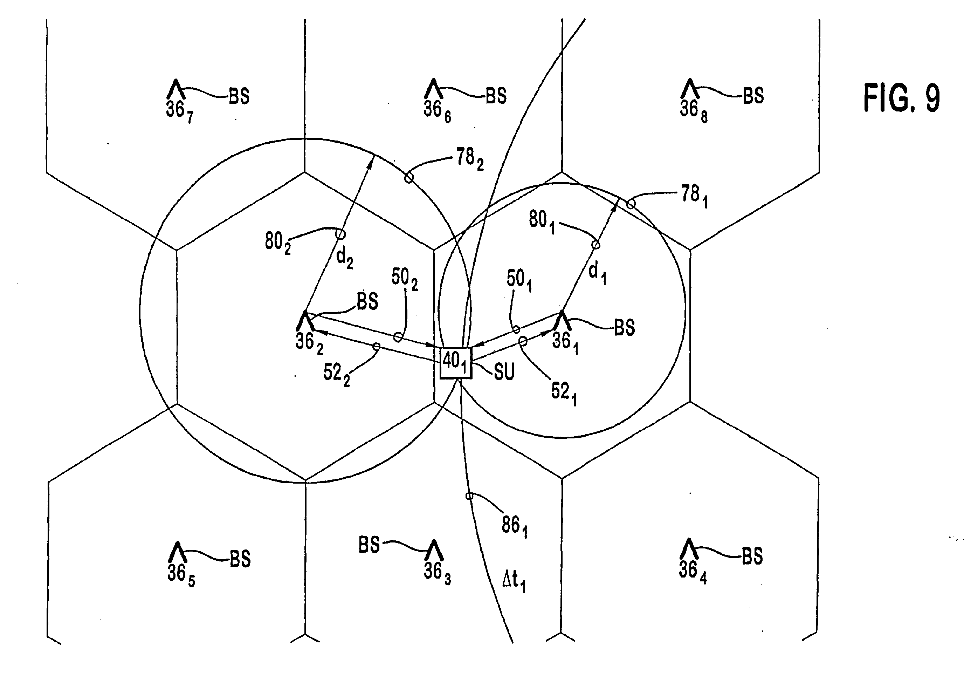

Using information from only two base stations **36₁**, **36₂** as shown in **Figure 9**, the processor uses distances *d₁*, *d₂* to create two circles **78₁**, **78₂**. Using the time difference, Δ*t₁*, a hyperbola **86₁** can be constructed as follows.

All the points along the hyperbola **86₁** receive the global pilot signals **52₁**, **52₂** from the synchronized base stations **36₁**, **36₂** with the same time difference, Δ*t₁*. The time difference Δ*t₁* can be converted to a distance difference Δ*d₁* by substituting Δ*t₁* for *t₁* and Δ*d₁* for *d₁* in **Equation 1**. Using the distance formula and X, Y as the location of the subscriber unit **40₁**, the following equation results: $Δ ⁢ {d}_{1} = \sqrt{{\left({X}_{1}-X\right)}^{2} + {\left({Y}_{1}-Y\right)}^{2}} - \sqrt{{\left({X}_{2}-X\right)}^{2} + {\left({Y}_{2}-Y\right)}^{2}}$

By using **Equation 8** with **Equations 3** and **4** in a maximum likelihood estimation, the location of the subscriber unit **40₁** can be determined. The subscriber unit's location is subsequently sent to the nearest police precinct **74₁**, **74₂** ... **74ₙ** and ambulance dispatcher **76** in the cellular area.

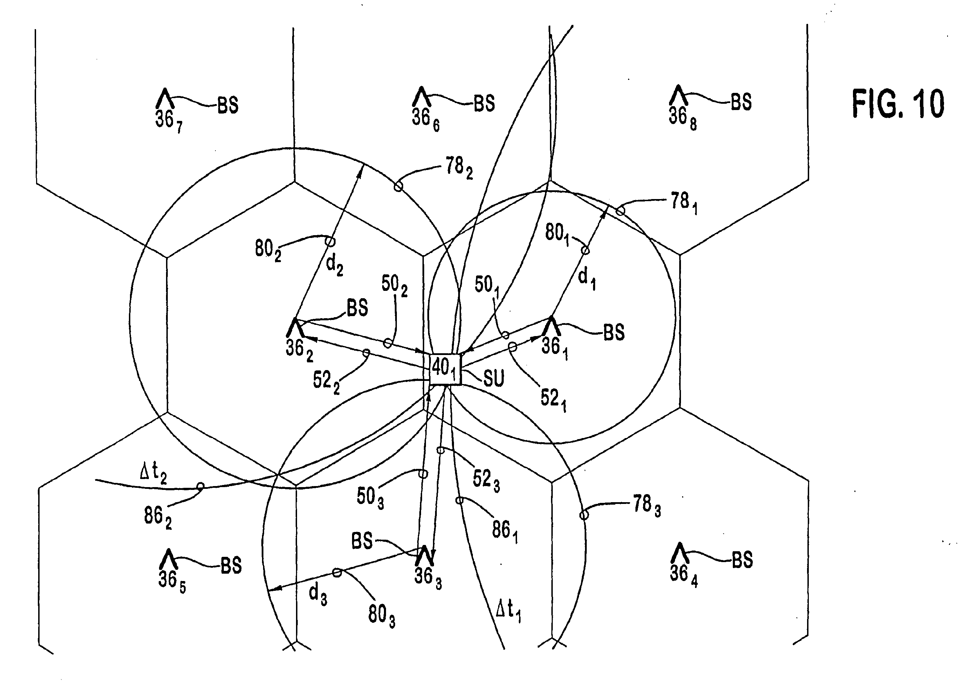

For improved accuracy, additional base stations **36₁**, **36₂** ... **36ₙ** are used. **Figure 10** shows the invention used with three base stations **36₁**, **36₂**, **36₃**. The distances *d₁, d₂, d₃* are used to create three circles **78₁**, **78₂**, **78₃**. Using time differences Δt₁, Δt₂, two intersecting hyperbolas **86₁**, **86₂** are constructed. With maximum likelihood estimation, the subscriber units' location calculated with two hyperbolas **86₁**, **86₂**, and three circles **78₁**, **78₂**, **78₃** yields greater accuracy.

As shown in **Figure 8****,** the subscriber unit **40₁** is required to process each global pilot chip code sequence to determine the time differences Δt₁, Δt₂ ... Δtₙ. An alternate approach removes the processing from the subscriber unit **40₁.**

With reference to **Figure 6****,** the mobile unit **40₁** will synchronize the assigned pilot to one of the base station's global pilot chip code sequences, such as the nearest base station **36₁** with a delay of τ₁. The assigned pilot **50₁** is transmitted to all base stations **36₁**, **36₂** ... **36ₙ**. The assigned pilot **50₁** will be received at each base station with a respective delay, τ*₁*+ τ*₁*, τ₁ + τ₂, τ*₁* + τ*₃*. Each base station **36₁**, **36₂** ... **36ₙ** will send the delayed chip code sequence along with the calculated distance to a processor **68** located in a NIU **34₁** or local exchange **32.** The processor **68** will calculate the time differences Δt₁, Δt₂ ... Δtₙ by comparing the received assigned pilot chip code sequences. Since all received assigned pilot chip code sequences are delayed by τ*₁*, the τ*₁* delay will cancel out of the resultant time differences Δt₁, Δt₂ ... Δtₙ. Accordingly, the subscriber unit **40₁** can be located using hyperbolas **86₁**, **86₂** as previously described.

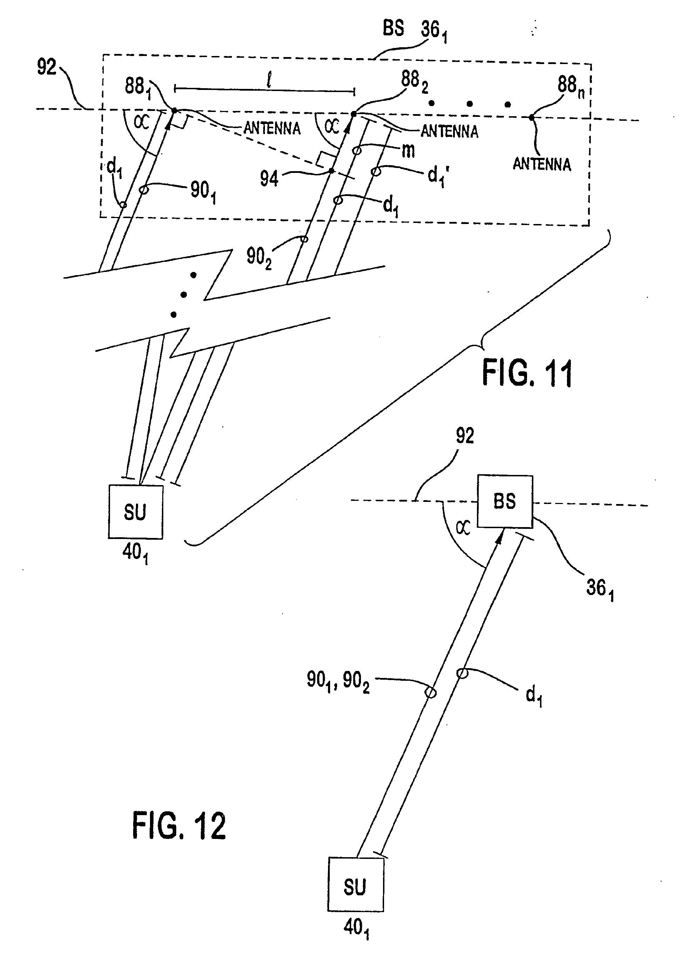

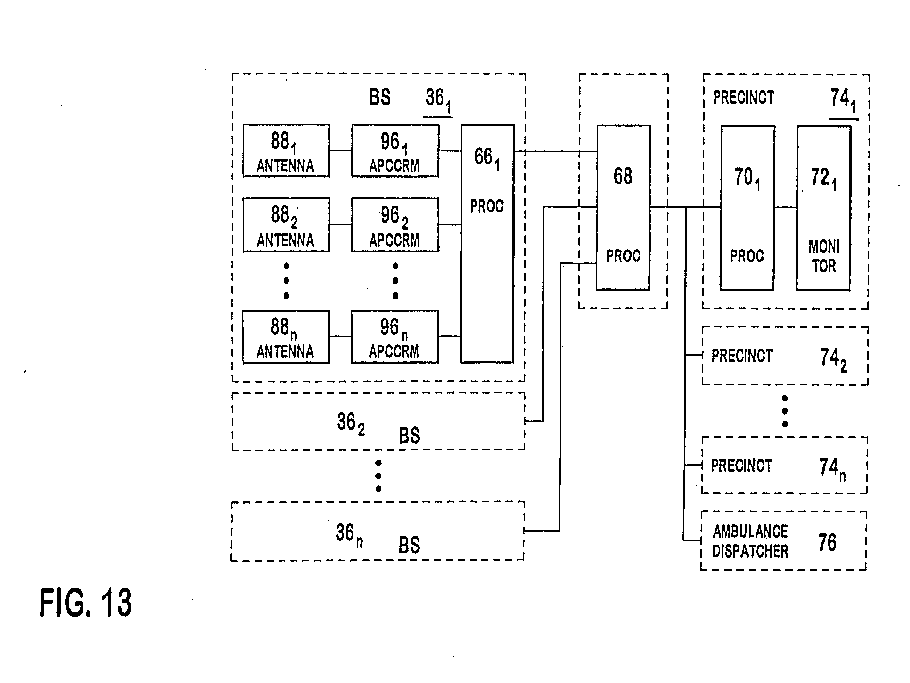

Another embodiment shown in **Figures 11**,**12** and **13** uses a base station **36₁** with multiple antennas **88₁**, **88₂** ... **88ₙ**. Two of the antennas **88₁**, **88₂** lie along a centerline **92** at a known distance, *l*, apart as shown in **Figure 11****.** Both antennas **88₁**, **88₂** receive the assigned pilot signal **90₁**, **90₂** from the subscriber unit **40₁.** However, the antenna **88₂** further away from the subscriber unit **40₁** receives the signal over a slightly longer distance *d₁*' and with a slight delay with respect to the nearer antenna **88₁.** This delay results in a carrier phase difference, φ, between the signals received at each antenna as shown on **Figure 13****.** A processor **66** using the received carrier phase difference and the chip code sequence recovered by each assigned pilot chip code recovery means **96₁**, **96₂** ... **96ₙ** can determine the location of the subscriber unit **40₁** as follows.

As shown in **Figure 12****,** the subscriber unit **40₁** is located at distance *d₁* at angle α from the centerline **92** of the antennas **88₁**, **88₂**. As seen at the scale of **Figure 12** both received assigned pilot signals **90₁**, **90₂** appear to be coincident. However, as shown in **Figure 11****,** the received assigned pilot signals **90₁**, **90₂** are slightly separated. The received assigned pilot signal **90₁** returning to the first antenna **88₁** travels a distance *d₁.* The received assigned pilot signal **90₂** returning to the second antenna **88₂** travels a slightly longer distance *d₁'*. As shown in **Figure 11**, the difference between the two distances *d₁, d₁'* is a distance *m*.

Since the distances *d₁, d₁'* between the antennas **88₁**, **88₂** and the subscriber unit **40₁** are much larger than the distance *l* between the antennae **88₁**, **88₂** both received assigned pilot signals **90₁**, **90₂** follow approximately parallel paths. By constructing a right triangle using a point **94** which is distance *d₁* from the subscriber unit **40₁** as shown in **Figure 11**, the angle ∝ can be determined by the following geometric relationship: $∝ = {COS}^{- 1} \left(m/l\right) .$

The distance *m* can be determined by using the carrier phase difference, φ, between the two received signals **90₁**, **90₂** as follows: $m = \frac{ϕ ⋅ λ}{2 ⁢ π}$
The distance *m* equals the phase difference between the two signals, φ, in radians multiplied by the wavelength of the signal, λ, divided by 2π. The wavelength, λ, can be derived from the known frequency f of the assigned pilot signal as follows: $λ = c / f .$

The processor **68** also compares the chip code sequences of the global pilot generating means **42₁** with the recovered assigned pilot chip code sequence to determine the distance *d₁* as shown in **Figure 6****.** Using both the angle ∝ and distance *d₁*, the processor **66₁** locates the subscriber unit **40₁** using simple geometry. There are many techniques well known to those skilled in the art to eliminate the ambiguity between locations above and below the antennas **88₁**, **88₂**. One such technique is using antennas employing sectorization. Subsequently, the subscriber unit's location is sent to the precincts **74₁**, **74₂** ... **74ₙ** and ambulance dispatcher **76**. Additional antennas may be used to improve on the accuracy of the system.

An alternate embodiment uses more than one base station **36₁**, **36₂**... **36ₙ**. A processor **68** located within either a NIU **34₁** or the local exchange **32** collects distance and angle information from more than one base station **36₁**, **36₂** ... **36ₙ** as well as the time differences Δt₁, Δt₂ ... Δtₙ, between the base stations **36₁**, **36₂**... **36ₙ**. Using the maximum likelihood estimation technique, the processor **68** determines a more accurate location of the subscriber unit **40₁.**

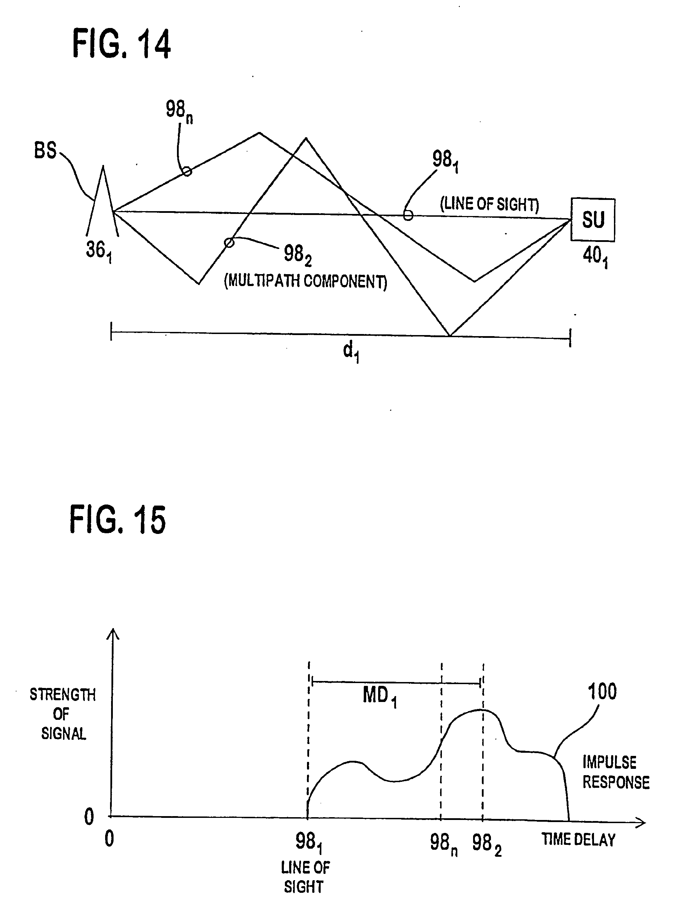

A fourth embodiment corrects for multipath. **Figure 14** illustrates multipath. A signal such as a global pilot signal is transmitted from a base station **36₁**. The signal follows a multitude of paths **98₁**, **98₂** ... **98ₙ** between the base station **36₁** and subscriber unit **40₁**.

**Figure 13** is a graph showing the impulse response **136** of the received multipath components. Since each received multipath component travels a unique path, it arrives at a receiver with a propagation delay determined by the length of the path **98₁**, **98₂** ... **98ₙ.** The impulse response **106** shows the collective signal magnitude of all the multipath components received at each propagation delay.

The previously described subscriber unit location techniques assumed the subscriber unit **40₁** synchronizes with the line of sight multipath component **98₁** traveling distance *d₁***.** However, if the subscriber unit synchronizes with a non-line of sight multipath component **98₁**, **98₂**... **98ₙ**, the distance calculation will be in error due to the delay **MD₁** as shown in **Figure 15****.**

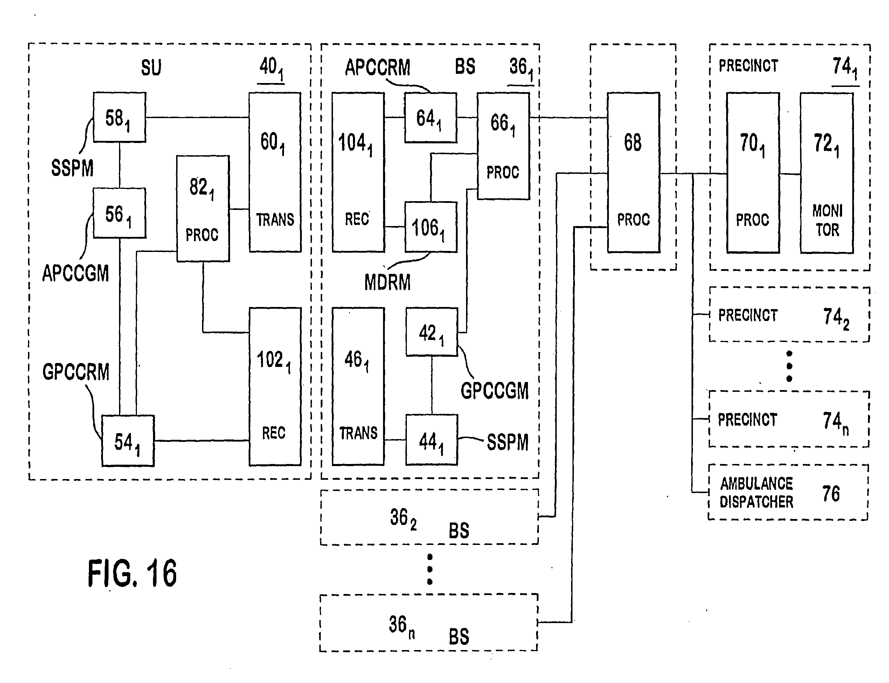

**Figure 16** is a system correcting for errors resulting from multipath. The global pilot **50₁** is sent from the base station **36₁** to subscriber unit **40₁.** The subscriber unit **40₁** collects all of the multipath components using a multipath receiver **102₁** such as disclosed in U.S. Patent Application No. 08/669,769, Lomp et al., incorporated here by reference. A processor **82₁** within the subscriber unit **40₁** analyzes the impulse response **100** of the received global pilot signal **50₁.**

Since the line of sight multipath component **98₁** travels the shortest distance *d₁*, the first received component **98₁** is the line of sight component. If the line of sight component is not received, the first received component **98₁** will be the closest and, accordingly, the best available estimate for the line of sight component. The processor **82₁** compares the chip code sequence of the first received component **98₁** with the chip code sequence used to synchronize the assigned pilot chip code sequence. This comparison determines the delay due to multipath, **MD₁.** The multipath delay, **MD₁**, is transmitted to the base station **36₁**.

A processor **66₁** and multipath receiver **104₁** within the base station **36₁** perform the same analysis on the received assigned pilot signal. As a result, the multipath delay, **MD₂**, of the assigned pilot signal is determined. Additionally, multipath delay recovery means **106₁** recovers the transmitted global pilot signal's multipath delay **MD₁** for use by the processor **66₁**. The processor **66₁** compares the generated global pilot chip code sequence to the recovered assigned pilot chip code sequence to determine the round trip propagation delay 2τ*₁*. To correct for multipath, the processor **66₁** subtracts both the global pilot signal's multipath delay **MD₁** and the assigned pilot signals multipath delay **MD₂** from the calculated round trip propagation delay, 2τ_{1.} The corrected round trip propagation delay is used to determine the subscriber unit's location in one of the techniques as previously described.

Although the invention has been described in part by making detailed reference to certain specific embodiments, such detail is intended to be instructive rather than restrictive. It will be appreciated by those skilled in the art that many variations may be made in the structure and mode of operation without departing from the scope of the invention as disclosed in the teachings herein.

### Preferred Aspects of the Invention:

1. A method for geographically locating a subscriber unit within a CDMA communication system having base stations with fixed locations, the method comprising:
   (a) transmitting a first spread spectrum signal with a first pseudo random chip code sequence from a base station;
   (b) receiving of said first spread spectrum signal including first signal multipath components at said subscriber unit;
   (c) determining a first received component of the received first signal multipath components;
   (d) transmitting a second spread spectrum signal with a second pseudo random chip code sequence from said subscriber unit, said second pseudo random chip code sequence being time synchronized with said received first spread spectrum signal;
   (e) receiving said second spread spectrum signal including second signal multipath components at said base station;
   (f) determining a first received component of the received second signal multipath components;
   (g) determining a distance between said base station and said subscriber unit based on the first received component of said second signal; and
   (h) determining said subscriber unit's geographic location based on said distance determination.
2. The method of aspect 1 wherein steps (a)-(g) are performed respectively for each of three base stations, each base station associated with a different fixed location, and step (h) determines said subscriber unit's geographic location based on said distance determinations for each of said three base stations.
3. The method of aspect 1 further comprising the steps of:
   performing steps(a)- (g) for both a first and a second base station, each base station associated with a different fixed location;
   time synchronizing said first base station's first spread spectrum signal with said second base station's first spread spectrum signal; and
   determining a time difference between said first base station's and said second base station's first spread spectrum signals received at said subscriber unit and
   wherein step (h) determines said subscriber unit's geographic location using said distance determinations and said determined time difference.
4. The method of aspect 1 further comprising the steps of:
   performing steps(a)- (g) for both a first and a second base station, each base station associated with a different fixed location;
   receiving at said second base station said second spread spectrum signal which is time synchronized with said first base station's spread spectrum signal, said first base station's second signal received at said second base station including first base station's second signal multipath components;
   determining a first received component of said received first base station's second signal multipath components at said second base station; and
   determining a time difference between said first base station's second spread spectrum signal received at said first base station and at said second base station and
   wherein step (h) determines said subscriber unit's geographic location using said distance determinations and said determined time difference.
5. The method of aspect 1 wherein said base station has first and second antennas each associated with a different fixed location and said second spread spectrum signal is received separately by said first and second antennas, further comprising the steps of:
   determining the phase difference between the respective second spread spectrum signals received by said first and second antennas; and
   calculating an angle associated with said base station and said subscriber unit based on said phase difference and the distance between the first and second antenna's fixed locations; and
   wherein step (h) determines said subscriber unit's geographic location based on said distance determination and said calculated angle.
6. The method of aspect 1 wherein said first signal and said second signal are pilot signals.
7. The method of aspect 1 wherein said base station's fixed location is associated with a latitude and a longitude and step (h) determines said subscriber unit's geographical location based on said latitude, said longitude, and said distance determination.
8. The method of aspect 1 further comprising the step of displaying said subscriber unit's geographic location on a map.
9. The method of aspect 1 further comprising the step of displaying said subscriber unit's geographic location as an address.
10. The method of aspect 1 wherein step (h) determines said subscriber unit's geographic location using said distance determination in a maximum likelihood estimation.
11. A method for determining a distance between a subscriber unit and a base station in a CDMA communication system, the method comprising:
   (a) transmitting a first spread spectrum signal with a first pseudo random chip code sequence from a base station;
   (b) receiving of said first spread spectrum signal including first signal multipath components at said subscriber unit;
   (c) determining a first received component of the received first signal multipath components;
   (d) transmitting a second spread spectrum signal with a second pseudo random chip code sequence from said subscriber unit, said second pseudo random chip code sequence being time synchronized with said received first spread spectrum signal;
   (e) receiving said second spread spectrum signal including second signal multipath components at said base station;
   (f) determining a first received component of the received second signal multipath components; and
   (g) determining a distance between said base station and said subscriber unit based on the first received component of the second signal.
12. A spread spectrum CDMA communication system capable of geographically locating a subscriber unit, the system comprising:
   means for determining said subscriber unit's geographic location based on a distance determination; and
   at least one base station, each of said at least one base stations comprising:
      means for transmitting a first spread spectrum signal with a first pseudo random chip code sequence;
      means for receiving a second spread spectrum .signal including second signal multipath components;
      means for determining a first received component of said received second signal multipath components; and
      means for determining a distance between said base station and said subscriber unit as said distance determination based on the first received component of said second signal; and
   said subscriber unit comprising:
      means for receiving said first spread spectrum signal including first signal multipath components;
      means for determining a first received component of said received first signal multipath components; and
      means for transmitting a second spread spectrum signal with a second pseudo random chip code sequence, said second pseudo random chip code sequence being time synchronized with said received first spread spectrum signal.
13. The system of aspect 12 wherein:
   said at least one base station is three base stations, each base station associated with a different fixed location;
   said subscriber unit receiving means receives from each of said three base stations said respective first spread spectrum signal including respective first signal multipath components;
   said subscriber unit first component determining means determines a respective first received component for each of said respective received first signal multipath components;
   said subscriber unit transmitting means transmits three second spread spectrum signals, each associated with one of said three base stations, each with a respective second pseudo random chip code sequence, said respective second pseudo random chip code sequence being time synchronized with said respective received first spread spectrum signal from said respective one of said three base stations; and
   said geolocation determining means determines said subscriber unit's geographic location based on said distance determination from each of said three base stations
14. The system of aspect 12 wherein:
   said at least one base station is two base stations, each base station associated with a different fixed location;
   said subscriber unit receiving means receives from each of said two base stations said respective first spread spectrum signal including respective first signal multipath components;
   said subscriber unit first component determining means determines a respective first received component for each respective received first signal multipath components;
   said subscriber unit transmitting means transmits two second spread spectrum signals, each associated with one of said two base stations, each with a respective second pseudo random chip code sequence, said respective second pseudo random chip code sequence being time synchronized with said received first spread spectrum signal from said respective base station;
   said subscriber unit further comprising time difference means for determining a time difference between said first base station's and said second base station's first spread spectrum signals received at said subscriber unit;
   said geographic location determining means determines said subscriber unit's geographic location using said distance determinations and said time difference; and
   said first base station's first spread spectrum signal transmitted at said first base station is time synchronized with said second base station's first spread spectrum signal transmitted at said second base station.
15. The system of aspect 12 wherein:
   said at least one base station is two base stations, each base station associated with a different fixed location;
   said first base station's first spread spectrum signal transmitted at said first base station is time synchronized with said second base station's first spread spectrum signal transmitted at said second base station;
   said subscriber unit receiving means receives from each of said two base stations said respective first spread spectrum signal including respective first signal multipath components;
   said subscriber unit first component determining means determines a respective first received component for each of said respective received first signal multipath components;
   said subscriber unit transmitting means transmits two second spread spectrum signals, each associated with one of said two base stations, each with a respective second pseudo random chip code sequence, each of said respective second pseudo random chip code sequences being time synchronized with said received first spread spectrum signal from said respective one of said two base stations; and
   said second base station further comprising:
      means for receiving said second spread spectrum signal which is time synchronized with said first base station's spread spectrum signal, said received first base station's second signal including first base station's second signal multipath components;
      means for determining a first received component of said received first base station's second signal multipath components at said second base station; and
      said geographic location determining means determines said subscriber unit's geographic location using said distance determinations and a determined time difference; and
      the system further comprising:
         means for determining a time difference between said first base station's second spread spectrum signal received at said first base station and at said second base station as said determined time difference.
16. The system of aspect 12 wherein:
   said base station further comprising:
      a first and second antenna, each associated with a different fixed location and said second spread spectrum signal is received separately by said first and second antennas;
      means for determining the phase difference between the respective second spread spectrum signals received by said first and second antennas; and
      means for calculating an angle associated with said base station and said subscriber unit based on said phase difference and the distance between the first and second antennas fixed locations; and
   wherein said geographic location determining means determines said subscriber unit's geographic location based on said distance determination and said calculated angle.
17. The system of aspect 12 further comprising means for displaying said subscriber unit's geographic location on a map.
18. The system of aspect 12 further comprising means for displaying said subscriber unit's geographic location as a street address.
19. A CDMA communication system capable of determining a distance between a subscriber unit and a base station, the system comprising:
   means for determining a distance between said base station and said subscriber unit based on the first received component of the second signal;
   said base station comprising:
      means for transmitting a first spread spectrum signal with a first pseudo random chip code sequence;
      means for receiving a second spread spectrum signal including second signal multipath components; and
      means for determining a first received component of the received second signal multipath components;
   said subscriber unit comprising:
      means for receiving said first spread spectrum signal including first signal multipath components;
      means for determining a first received component of said received first signal multipath components; and
      means for transmitting a second spread spectrum signal with a second pseudo random chip code sequence being time synchronized with said received first spread spectrum signal.
20. A subscriber unit for use in a CDMA communication system capable of geographically locating said subscriber unit, said subscriber unit comprising:
   means for receiving a first spread spectrum signal with a first pseudo random chip code sequence, said first signal including first signal multipath components;
   means for determining a first received component of said received first signal multipath components;
   means for determining a delay associated with said first received component; and
   means for transmitting a second spread spectrum signal with a second pseudo random chip code sequence and a signal including said determined delay, said second pseudo random chip code sequence being time synchronized with said received first spread spectrum signal.
21. A base station comprising:
   a plurality of antennas, each of the antennas separated by a known distance:
      means for transmitting a first spread spectrum signal having a first code;
      means for receiving, using the plurality of antennas, a second spread spectrum signal having a second code, the second spread spectrum signal time synchronized with the first spread spectrum signal;
      means for making a distance determination based on in part a timing difference between the second code of the received second spread spectrum signal and the first code of the base station's transmitted first spread spectrum signal;
      means for comparing a phase difference of a carrier signal of the second spread spectrum signal as received by each of the plurality of antennas; and
      means for determining an angle of the received second spread spectrum signal using the known distance between the antennas and the phase difference: and
      means for determining a location of a source of the second spread spectrum signal using the determined angle and the distance determination.
22. The base station of aspect 21 comprising means for analyzing an impulse response of multipath components of the second spread spectrum signal to determine a first received component of the second spread spectrum signal and the determined first received component is used to make the distance determination.
23. The base station of aspect 21 or 22 wherein the first spread spectrum signal is a pilot signal.

## Claims

1. A subscriber unit comprising:
means for receiving a plurality of first spread spectrum signals, each first spread spectrum signal having a first code;
means for analyzing an impulse response of multipath components of each received first spread spectrum signal to determine a first received component of that received first spread spectrum signal;
means for each received first spread spectrum signal for transmitting a second spread spectrum signal having a second chip code time synchronized to the first received component of that received first spread spectrum signal;
means for determining a code timing difference between the first received components of the received first spread spectrum signals; and
means for transmitting the code timing difference.

2. The subscriber unit of claim 1, wherein the first spread spectrum signal is a pilot signal.

3. A base station comprising:
a plurality of antennas, each of the antennas separated by a known distance;
means for transmitting a first spread spectrum signal having a first code;
means for receiving, using the plurality of antennas, a second spread spectrum signal having a second code, the second spread spectrum signal time synchronized with the first spread spectrum signal;
means for making a distance determination based on in part a timing difference between the second code of the received second spread spectrum signal and the first code of the base station's transmitted first spread spectrum signal;
means for comparing a phase difference of a carrier signal of the second spread spectrum signal as received by each of the plurality of antennas;
means for determining an angle of the received second spread spectrum signal using the known distance between the antennas and the phase difference; and
means for determining a location of a source of the second spread spectrum signal using the determined angle and the distance determination.

4. The base station of claim 3, comprising means for analyzing an impulse response of multipath components of the second spread spectrum signal to determine a first received component of the second spread spectrum signal and the determined first received component is used to make the distance determination.

5. The base station of claim 3, wherein the first spread spectrum signal is a pilot signal.
